# EUROPÄISCHE PATENTSCHRIFT

(11) **EP 2 767 348 B1**
(45) Veröffentlichungstag und Bekanntmachung des Hinweises auf die Patenterteilung: **14.06.2017**
(21) Anmeldenummer: 14155239.8
(22) Anmeldetag: 14.02.2014
(51) Int. Cl.: B05B 7/00, B05B 17/00, B05B 1/14, B05B 11/00, B29C 45/26, B29C 45/37, B29C 45/00

(54) **Mittels Spritzguss für einen Flüssigkeitsspender hergestellte Lochplatte mit Mikroöffnungen**
Nozzle plate for a liquid dispenser having micro-openings and being made by injection moulding
Plaque de buse d'un distributeur de liquide comprenant des trous minces et fabriquée par moulage par injection

(30) Priorität: 16.02.2013 DE 102013202532
(43) Veröffentlichungstag der Anmeldung: 20.08.2014
(73) Patentinhaber: Aptar Radolfzell GmbH, 78315 Radolfzell (DE)
(72) Erfinder: Krampen, Gerald, 78315 Radolfzell (DE)
(74) Vertreter: Patentanwaltskanzlei Cartagena

(56) Entgegenhaltungen:
- EP-A2- 0 714 708
- WO-A1-2011/083380
- WO-A1-2012/064790
- DE-A1-102007 051 487
- US-A- 4 882 055
- US-A1- 2007 151 920

## Beschreibung

### Anwendungsgebiet und Stand der Technik

Die Erfindung betrifft eine Lochplatte für einen Spender, der dem Austrag von Flüssigkeiten dient sowie eine Düseneinheit mit einer solchen Lochplatte und einen entsprechenden Spender.

Die Lochplatten, die in diesem Dokument behandelt werden, sind Lochplatten, die bei Flüssigkeitsspendern Verwendung finden, wobei Flüssigkeitsspender im vorliegenden Kontext mobile, nicht fest installierte Spender meint, die insbesondere zum Austrag von pharmazeutischen Flüssigkeiten und medizinischen Spülungen, zum Austrag von kosmetischen Flüssigkeiten sowie zum Austrag von Lebensmitteln vorgesehen sein können. Die genannten Lochplatten zeichnen sich dadurch aus, dass sie eine Vielzahl von Austragöffnungen aufweisen und dadurch eine besondere Austragcharakteristik gestatten. Die Flüssigkeit wird in Form feiner Strahlen abgegeben, was zur gewünschten Verteilung eines Pharmazeutikums oder zur Erzeugung eines weichen Strahls zum Auswaschen von Wunden ebenso vorteilhaft sein kann wie für eine gleichmäßige Verteilung einer kosmetischen Flüssigkeit.

Lochplatten im Zusammenhang mit Spendern sind aus dem Stand der Technik insbesondere im Kontext von Spendern mit Vibrationseinrichtungen bekannt, so beispielsweise aus der EP 0 923 957 A1. Derartige Lochplatten werden in der Regel durch Laserbearbeitung oder durch Ätzbearbeitung hergestellt. Die Herstellung ist meist recht aufwendig.

Obwohl eine Lochplatte, die mit dem hier beschriebenen Verfahren hergestellt wurde, grundsätzlich auch bei solchen Spendern mit Vibrationseinrichtung Verwendung finden kann, ist der Schwerpunkt des Anwendungsgebietes der hier beschriebenen Lochplatten derart, dass durch die Lochplatte hindurch ein kontinuierlicher Flüssigkeitsstrom gewünscht ist, der beispielsweise mittels einer manuell zu betätigenden Pumpeinrichtung erzeugt werden kann oder durch eine bereits bei der Herstellung vorgesehenen Druckbeaufschlagung der auszutragenden Flüssigkeit.

Eine Lochplatte mit den im Oberbegriff des Anspruchs 1 genannten Merkmalen ist aus DE102007051487 bekannt.

### Aufgabe und Lösung

Aufgabe der vorliegenden Erfindung ist die Zurverfügungstellung einer kostengünstig herstellbaren Lochplatte einschließlich eines Verfahrens, mittels dessen die Lochplatten zur Verwendung in den genannten Anwendungsgebieten preisgünstig herstellbar sind.

Diese Aufgabe wird durch eine Lochplatte gemäß Anspruch 1 gelöst. Die Herstellung der erfindungsgemäßen Lochplatte, welche mit einer Vielzahl die Lochplatte durchdringende Austragöffnungen versehen ist, kann mittels eines Verfahrens hergestellt werden, bei dem die Lochplatte als Kunststoffbauteil mittels Spritzguss hergestellt wird, wobei hierfür vorzugsweise ein Formwerkzeug mit mindestens zwei Werkzeughälften Verwendung findet, die gemeinsam eine Kavität definieren, die beim Spritzgießen mit Kunststoff gefüllt wird. Dabei weist die erste Werkzeughälfte eine der Kavität zugewandte ebene Anlagefläche auf. Die zweite Werkzeughälfte verfügt über eine Vielzahl von sich über eine Grundfläche erhebende Erhebungen. Im geschlossenen Zustand des Formwerkezugs, in welchem die genannten beiden Werkzeughälften ihre minimale Beabstandung aufweisen, ist vorgesehen, dass distale Kontaktbereiche an distalen Enden der Erhebungen an der Anlagefläche anliegen, so dass sie beim Einspritzen des Kunststoffs die Austragöffnungen von Kunststoff frei halten.

Bei dem vorgeschlagenen Herstellungsverfahren ist somit vorgesehen, dass an einer Werkzeughälfte eine Vielzahl von Erhebungen vorgesehen ist, die mit der Anlagefläche an der anderen Werkzeughälfte vor Einspritzen des Kunststoffes in Berührkontakt gebracht werden. So kann der eingespritzte Kunststoff die Kavität entlang jener brückenartigen Verbindungen nicht ausfüllen, so dass hierdurch nach Erstarren des Kunststoffes die Austragöffnungen gebildet werden. Die Anlagefläche an der ersten Werkzeughälfte ist in sich eben ausgebildet, so dass alle Erhebungen im Bereich einer gemeinsamen Ebene an der Anlagefläche anliegen. Zwischen jenen Stellen, an denen die Kontaktbereiche der Erhebungen an der Anlagefläche anliegen, kann diese jedoch auch eine von der Ebene abweichende Form aufweisen, da dies die Herstellung der Austragöffnungen nicht beeinflusst. Von Vorteil ist jedoch eine durchgehend ebene Anlagefläche.

Die Herstellungsmethode mittels der zwei Werkzeughälften ist technisch vergleichsweise anspruchslos und führt zu für den genannten Anwendungszweck gut verwendbaren Lochplatten. Als Kunststoffe eignen sich insbesondere Polypropylene (PP), Polyethylene (PE), Polyoxymethylen (POM), Polybutylenterephthalat (PBT) sowie Cyclo-Olefin-Copolymer (COC).

Die durch das beschriebene Verfahren herstellbare Lochplatte ist somit eine im Spitzgussverfahren hergestellte Lochplatte, die von einer Vielzahl von Austragöffnungen durchdrungen wird. Da die zweite Werkzeughälfte mit der Vielzahl von Erhebungen gegenüber der Lochplatte entformbar bleiben muss, sind die Austragöffnungen, die die Lochplatte durchdringen, derart geformt, dass sie sich von einer ersten Seite der Lochplatte zu einer gegenüberliegenden zweiten Seite der Lochplatte hinterschneidungsfrei verjüngen. Von der ersten Seite der Lochplatte, insbesondere von der Innenseite, zur deren zweiter Seite hin, insbesondere zur Außenseite hin, verringert sich der Querschnitt einer jeden Austragsöffnung demnach oder bleibt abschnittsweise gleich. Eine Vergrößerung des Querschnitts findet zum Zwecke der Verformbarkeit und aus strömungstechnischen Gründen nicht statt.

Die erste Seite wird dabei in Hinblick auf die Einbausituation vorzugsweise durch die Innenseite der Lochplatte gebildet. Es kann jedoch Einbausituationen geben, bei denen die Lochplatte sich nach außen vergrößernde Austragöffnungen aufweist. Diese wirken dann in Art einer Drossel.

Bei einer erfindungsgemäßen Lochplatte ist weiterhin vorgesehen, dass diese über mindestens 25 Austragöffnungen verfügt, wobei die Austragöffnungen derart angeordnet sind, dass mindestens fünf Austragöffnungen je Quadratmillimeter vorgesehen sind. Im Falle von 50 Austragöffnungen ist somit der von den Austragöffnungen durchdrungene Bereich der Lochplatte nicht größer als 5 mm².

Die tatsächlich zweckmäßige Zahl der Austragöffnungen hängt vom Anwendungsfall ab. Es hat sich bei vielen Anwendungen als vorteilhaft herausgestellt, wenn die Zahl der Austragöffnungen über den genannten 25 liegt, insbesondere bei 50 oder mehr oder gar 100 oder mehr Austragöffnungen liegt. Weiterhin ist für viele Anwendungen auch eine noch engere Anordnung der Austragöffnungen von Vorteil, so dass vorzugsweise mindestens 10 Austragöffnungen je Quadratmillimeter vorgesehen sind. Es hat sich gezeigt, dass derart feine Strukturen mittels Spritzguss sehr gut und preisgünstig herstellbar sind.

Die Dicke der Lochplatte, die durch die Austragkanäle durchdrungen wird, beträgt vorzugsweise zwischen 0,1 mm und 1,5 mm. Insbesondere vorzugsweise liegt sie im Bereich zwischen 0,2 mm und 0,8 mm. Als in Hinblick auf die Austragcharakteristik vorteilhaft haben sich die beschriebenen ebenfalls fertigungstechnisch vorteilhaften verjüngten Austragöffnungen herausgestellt. Vorzugsweise beträgt der Öffnungswinkel dieser Austragöffnungen von einer zweiten Seite, vorzugsweise der Außenseite, in Richtung der gegenüberliegenden ersten Seite der Lochplatte, insbesondere der Innenseite, zwischen 15° und 90°, insbesondere zwischen 30° und 45°. Wenngleich es im Einzelfall zweckmäßig sein kann, Austragöffnungen vorzusehen, die auf der ersten Seite der Lochplatte durch eine gemeinsame Öffnung gebildet werden, auf der zweiten Seite der Lochplatte sich jedoch in mehrere Einzelöffnungen aufspalten, so wird es demgegenüber als vorteilhaft angesehen, wenn die Austragöffnungen jeweils als ein die Lochplatte durchdringender Kanal ausgebildet sind, der an beiden Seiten der Lochplatte jeweils in nur einer Öffnung mündet.

Was die Größe der Austragöffnungen angeht, so weist deren minimaler Querschnitt, der an der zweiten Seite der Lochplatte, in Richtung derer sich die Austragöffnungen verjüngen, also insbesondere an der Außenseite, gegeben ist, eine Fläche zwischen 25 µm² und 10.000 µm² auf. Im Falle quadratischer Austragsöffnungen, beträgt deren Kantenlänge somit vorzugsweise zwischen 5 µm und 100 µm. Von besonderem Vorteil ist einer Austragöffnungsgröße im Bereich zwischen 500 µm² und 2.000 µm².

Die mittels des beschriebenen Verfahrens hergestellte erfindungsgemäße Lochplatte kann eine Struktur aufweisen, bei der keinerlei Teilabschnitt sich über die Innenseite bzw. die Außenseite im Bereich der Austragöffnungen erhebt. Die Lochplatte kann jedoch auch Teil einer Düseneinheit für einen Spender sein, die neben dieser Lochplatte weitere hiermit einstückig verbundene Komponenten aufweist, die im Rahmen eines einheitlichen Spritzgussvorgangs hergestellt werden. So kann insbesondere vorgesehen sein, dass ein mit der Lochplatte einstückig verbundener Befestigungsrahmen oder ein anderweitiges Befestigungsmittel vorgesehen ist, der die Lochplatte umgibt und zur Festlegung an einem Austragkopf eines Spenders vorgesehen ist. Da die Lochplatte eine sehr geringe Dicke aufweisen kann, kann ein solches Befestigungsmittel geeignet sein, die Handhabung der Lochplatte während der Montage zu erleichtern. Insbesondere kann ein solcher Befestigungsrahmen jener Abschnitte und Flächen zur Verfügung stellen, die der Festlegung der Lochplatte dienen. Dies können beispielsweise im Kunststoff gefertigte Rastmittel oder dergleichen sein, die an entsprechenden Gegenkomponenten eines Austragkopfes kraftschlüssig oder formschlüssig befestigt werden. Der genannte Befestigungsrahmen weist vorzusgweise eine Dicke auf, die die der Lochplatte im Bereich der Austragöffnungen übersteigt.

Die genannte Lochplatte bzw. die genannte Düseneinheit wird bei einem erfindungsgemäßen Spender verwendet, wobei dieser darüber hinaus einen Flüssigkeitsspeicher sowie einen verbindenden Verbindungskanal zwischen den Flüssigkeitsspeicher und einer Düseneinheit aufweist.

Wie bereits erläutert, kann ein solcher Spender in verschiedenen Bereichen Verwendung finden, in denen der Austrag von Flüssigkeiten gewünscht ist. Hierzu zählt der Austrag pharmazeutischer Flüssigkeiten, die durch die Lochplatte in Form einzelner dünner Sprühstrahlen ausgetragen werden. Die Verabreichung kann dabei beispielsweise nasal, oral oder topisch erfolgen. Insbesondere auch der Austrag von Flüssigkeiten wie beispielsweise Wasser zum Zwecke des Waschens von Wunden kann durch einen erfindungsgemäßen Spender erfolgen. Im kosmetischen Bereich kann durch die Lochplatte ein sehr homogenes Sprühbild erzeugt werden, welches beispielsweise bei Selbstbräunerflüssigkeiten, aber auch bei anderen kosmetischen Flüssigkeiten, vorteilhaft ist. Daneben sind auch weitere Anwendungsfelder denkbar, wie beispielsweise der Austrag von flüssigen Lebensmitteln.

Die erfindungsgemäße Lochplatte findet insbesondere bei einem erfindungsgemäßen Spender als Trennwandung zwischen einem durch die Flüssigkeit druckbeaufschlagten Raum vor der Lochplatte und einer äußeren Umgebung Anwendung. In den genannten Raum gelangt bei einem solchen Spender ausschließlich Flüssigkeit, die dann durch die Austragöffnungen hindurch gepresst wird. Die Austragöffnungen agieren als Düsen. Sie wandeln den Flüssigkeitsdruck zum Teil in kinetische Energie um, mit der die Flüssigkeit in Form von Sprühstrahlen ausgetragen wird.

Wie eingangs bereits dargestellt, kann eine erfindungsgemäße Lochplatte auch in einem an sich bekannten Spender Verwendung finden, bei dem Flüssigkeit durch eine elektrische Vibrationseinrichtung in Schwingungen versetzt wird und somit gepulst durch die Lochplatte hindurchgedrückt wird. Die Verwendung einer erfindungsgemäßen Lochplatte ist jedoch insbesondere bei solchen Spendern vorgesehen, bei denen ein zumindest über Zeitspannen größer 0,05 Sekunden kontinuierlicher Flüssigkeitsstrom durch die Austragöffnungen der Lochplatte hindurch gegeben ist. Hierzu weist ein erfindungsgemäßer Spender vorzugsweise eine manuelle Pumpvorrichtung auf, mittels derer Flüssigkeit aus dem Flüssigkeitsspeicher druckbeaufschlagt wird, wobei unmittelbar durch diese Druckbeaufschlagung die Flüssigkeit durch die Austragöffnung der Lochplatte hindurch gedrückt wird. Eine darüber hinausgehende Vibrationseinrichtung ist nicht vorgesehen. Auch kann der Lochplatte ein Auslassventil vorgeschaltet sein und der Spender einen Druckspeicher aufweisen, mittels dessen Flüssigkeit im Flüssigkeitsspeicher des Spenders permanent druckbeaufschlagt ist, wobei durch Öffnen und Schließen des Auslassventils der Zustrom der Flüssigkeit zur Lochplatte unter Austrag der Flüssigkeit durch die Lochplatte hindurch gesteuert werden kann.

Ein Werkzeug zur Herstellung einer Lochplatte der beschriebenen Art sieht vorzugsweise derart aus, dass es zwei Werkzeughälften aufweist, die im geschlossenen Zustand des durch diese gebildeten Formwerkzeugs aneinander anliegen und eine zwischen ihnen verbleibende Kavität begrenzen. Dabei weist die erste Werkzeughälfte die bereits genannte der Kavität zugewandte ebene Anlagefläche auf. Die zweite Werkzeughälfte weist die ebenfalls bereits erwähnten sich über eine Grundfläche erhebenden Erhebungen auf, an deren distalen Enden jeweils ein Kontaktbereich vorgesehen ist, wobei die Kontaktbereiche aller Erhebungen in einer gemeinsamen Ebene angeordnet sind, so dass sie im geschlossenen Zustand des Formwerkzeugs gleichzeitig an der ebenen Anlagefläche anliegen. Ein solches Formwerkzeug ist vorzugsweise aus Metall hergestellt. Die Erhebungen des Formwerkzeugs sind vorzugsweise in einer matrixartigen Anordnung vorgesehen.

In Hinblick auf das nachfolgend noch beschriebene bevorzugte Herstellungsverfahren zur Herstellung eines solchen Formwerkzeugs ist vorzugsweise vorgesehen, dass die Erhebungen durch eine Mehrzahl von Seitenflächen begrenzt werden, wobei diese Seitenflächen jeweils derart geformt sind, dass die Gesamtheit aller Normalenvektoren auf einem beliebigen Teil einer Seitenfläche in einer gemeinsamen Normalenvektorenebene oder parallel zu dieser Ebene angeordnet sind. Die Zahl der Seitenflächen der Erhebungen beträgt vorzugsweise zwischen drei und sechs, insbesondere vorzugsweise beträgt sie vier. Die genannte Gestaltung der Seitenflächen sieht vor, dass alle Normalenvektoren auf einer jeden der Seitenflächen parallel zu einer Normalenvektorenebene liegen. Im einfachsten Falle sind die Seitenflächen selbst jeweils eben. Sie können jedoch auch eine bezogen auf eine ihrer Erstreckungsrichtungen gekrümmte Formgebung aufweisen, wie insbesondere bei den nachfolgend noch beschriebenen Ausführungsbeispielen erläutert ist.

Korrespondierend zu der Formgebung dieser Erhebungen ist eine erfindungsgemäße Lochplatte vorzugsweise mit Austragöffnungen versehen, die durch eine Mehrzahl von Seitenflächen begrenzt werden, wobei diese Seitenflächen jeweils derart geformt sind, dass die Gesamtheit aller Normalenvektoren auf einem beliebigen Teil einer Seitenfläche in einer gemeinsamen Normalenvektorenebene oder parallel zu dieser Ebene angeordnet sind. Auch für alle anderen Vorschläge in diesem Dokument zur Formgebung und Gestaltung der Erhebung gilt, dass hierdurch die komplementäre Formgebung und Gestaltung der Austragöffnungen der erfindungsgemäßen Lochplatte beschrieben ist.

Weiterhin ist es von Vorteil, wenn die Seitenflächen von einer Mehrzahl von Erhebungen des Werkzeugs bzw. von Austragöffnungen der Lochplatte zueinander fluchten, so dass die Normalenvektorenebene einer Seitenfläche einer Erhebung parallel zu der normalen Vektorenebene einer Seitenfläche einer benachbarten anderen Erhebung bzw. einer anderen Austragöffnung angeordnet ist.

Die Seitenflächen der Erhebungen bzw. der Austragöffnungen schließen mit einer Flächennormale auf der Grundfläche der zweiten Werkzeughälfte bzw. einer entsprechend ausgerichteten Referenzrichtung der Lochplatte vorzugsweise ein Winkel zwischen 7,5° und 45° ein, insbesondere zwischen 15° und 22,5°. Dabei ist dieser Winkel zwischen der Referenzrichtung einerseits und einer gedachten Linie, die die Außenkante eines Fußes der Erhebung mit der Mitte des Kontaktbereichs am distalen Ende der Erhebung verbindet andererseits gegeben. Entsprechend der gewünschten Dicke der Lochplatte weist die Kavität zwischen der Grundfläche der zweiten Werkzeughälfte und der Anlagefläche der ersten Werkzeughälfte vorzugsweise eine Dicke zwischen 0,1 mm und 1,5 mm auf, insbesondere zwischen 0,2 mm und 0,8 mm.

Das beschriebene Spritzgussformwerkzeug kann derart hergestellt sein, dass ausgehend von einem metallischen Rohling eine Mehrzahl von geradlinig erstreckten und sich zumindest zum Teil kreuzenden Nuten in den Rohling eingebracht werden, wobei die zwischen den Nuten stehen bleibenden Bereiche die Erhebungen bilden. Es kann somit ausgehend von einem flachen Rohling alleine durch Einbringen der Nuten die gewünschte Struktur mit einer Vielzahl von Erhebungen erzielt werden. Das Einbringen der Nuten kann dabei beispielsweise durch ein spanendes Fertigungsverfahren erfolgen.

Vorzugsweise wird eine Vielzahl von jeweils gleich beabstandeten Nuten in zwei gegeneinander um 90° versetzten Richtungen eingebracht, so dass sich die genannte Matrixstruktur von Erhebungen ergibt, die zu einer Matrixstruktur der Austragöffnungen in der Lochplatte führt.

Als besonders vorteilhaft hat es sich herausgestellt, die Nuten durch Drahterosion herzustellen. Hierbei wird vorzugsweise ein Erodierdraht quer zu seiner während dieses Verfahrensschrittes gleich bleibenden Erstreckungsrichtung in einer wiederholt absinkenden und ansteigenden Bewegung durch den Rohling hindurchgeführt, um nacheinander eine Mehrzahl zueinander paralleler Nuten zu erzeugen. Wenn dies zweimal oder noch häufiger mit gegeneinander versetzten Erstreckungsrichtungen des Erodierdrahts wiederholt wird, ergibt sich die gewünschte Matrixstruktur.

### Kurzbeschreibung der Zeichnungen

Weitere Aspekte und Vorteile der Erfindung ergeben sich aus den Ansprüchen sowie der nachfolgenden Beschreibung bevorzugter Ausführungsbeispiele der Erfindung, die anhand der Figuren erläutert werden. Hierbei zeigen:
- Fig. 1a: schematisch den Aufbau eines Werkzeugs zur Herstellung einer erfindungsgemäßen Lochplatte,
- Fig. 1b: ein Ausschnitt aus einer Lochplatte, die mit dem Werkzeug gemäß Fig. 1a hergestellt wurde,
- Fig. 2a bis 2d: die Herstellung einer Lochplatte mit einem Werkzeug entsprechend dem der Fig. 1 a,
- Fig. 3a bis 3c: die Methodik zur Herstellung des Werkszeugs selbst mit den sich über eine Grundfläche erhebende Erhebungen,
- Fig. 4a bis 4c: verschiedene Varianten zur Formgebung der Erhebungen und
- Fig. 5: einen Spender, der mit einer Düseneinheit mit erfindungsgemäßer Lochplatte ausgestattet ist.

### Detaillierte Beschreibung der Ausführungsbeispiele

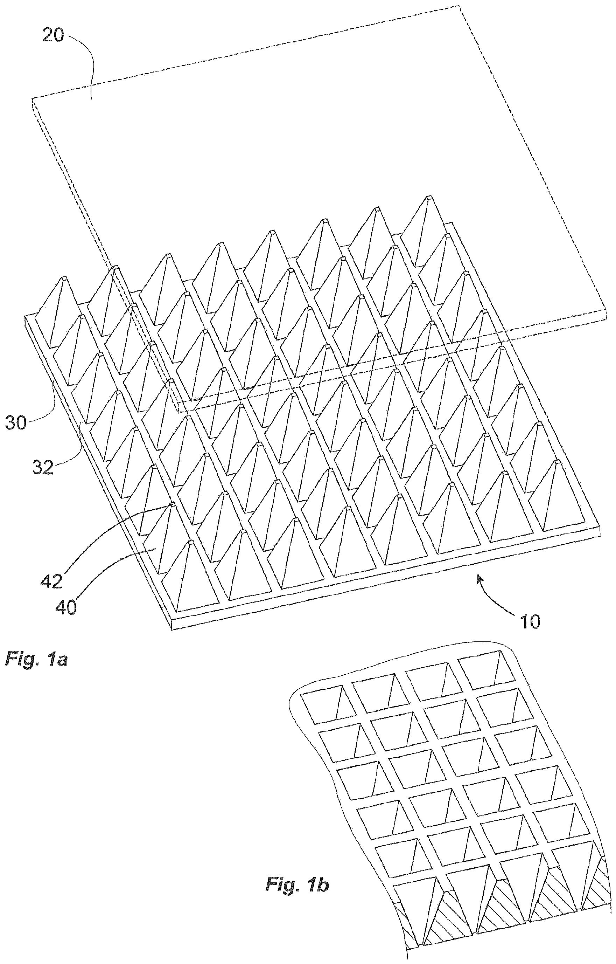

Fig. 1 a zeigt in schematischer Form ein Formwerkzeug 10 zur Herstellung einer erfindungsgemäßen Lochplatte. Dieses weist zwei jeweils einer der beiden Werkzeughälften des Formwerkzeugs 10 zugeordnete Komponenten auf, nämlich zum Einen eine gestrichelt dargestellte Anlagefläche 20, die in Richtung der Kavität 12 des Werkzeugs 10 eben ausgebildet ist. Ihr gegenüberliegend ist eine zweite Komponente 30 vorgesehen, welche über eine Grundfläche 32 verfügt, über die sich eine Vielzahl von Erhebungen 40 erheben. Diese Erhebungen 40 haben im vorliegenden Beispiel der Fig. 1 jeweils die Form eines Pyramidenstumpfes, so dass sie an ihrem der Grundfläche 32 abgewandten Ende in einem ebenen Kontaktbereich 42 enden. Alle Kontaktbereiche 42 der Erhebungen 40 liegen in einer gemeinsamen Ebene, so dass sie gleichzeitig in Anlage mit der Anlagefläche 20 gebracht werden können.

Vorliegend ist eine Gestaltung mit 64 Erhebungen 40 vorgesehen. Dies ist als rein beispielhaft zu verstehen. Je nach Anwendungszweck können auch eine geringere und insbesondere auch eine deutlich höhere Zahl von Erhebungen 40 vorgesehen sein. Weiterhin ist die Gestaltung der Erhebungen mit quadratischer Formgebung im Bereich der Grundfläche 32 nicht zwingend. Hier könnte beispielsweise auch eine dreieckige Formgebung vorgegeben sein.

Der Fig 1 b ist zu entnehmen, wie die Form einer Lochplatte 60 aussieht, das durch dieses Werkzeug 10 erzeugt wurde. Es ergeben sich sich verjüngende Austragöffnungen 60a mit der Form eines Kegelstumpfes.

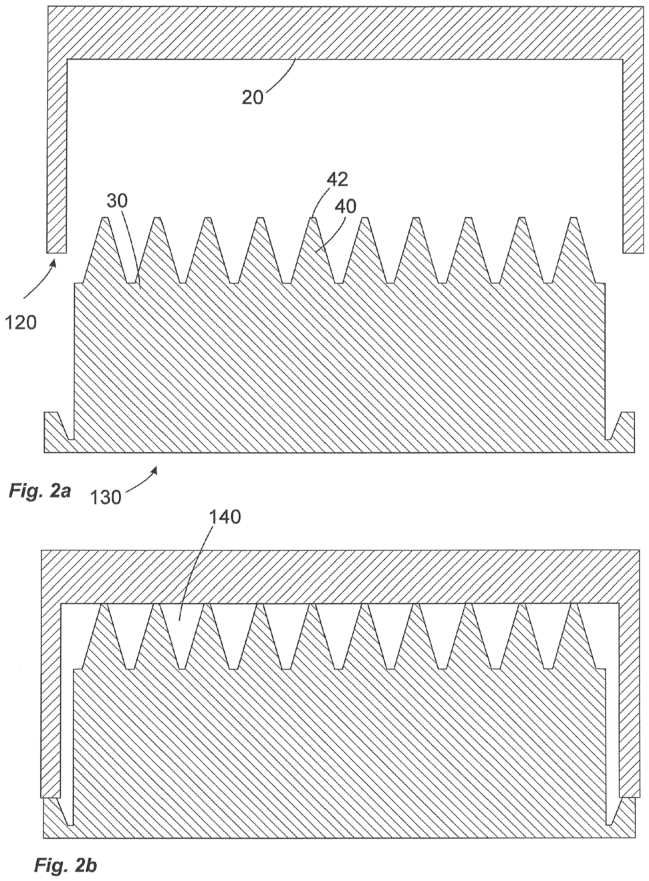

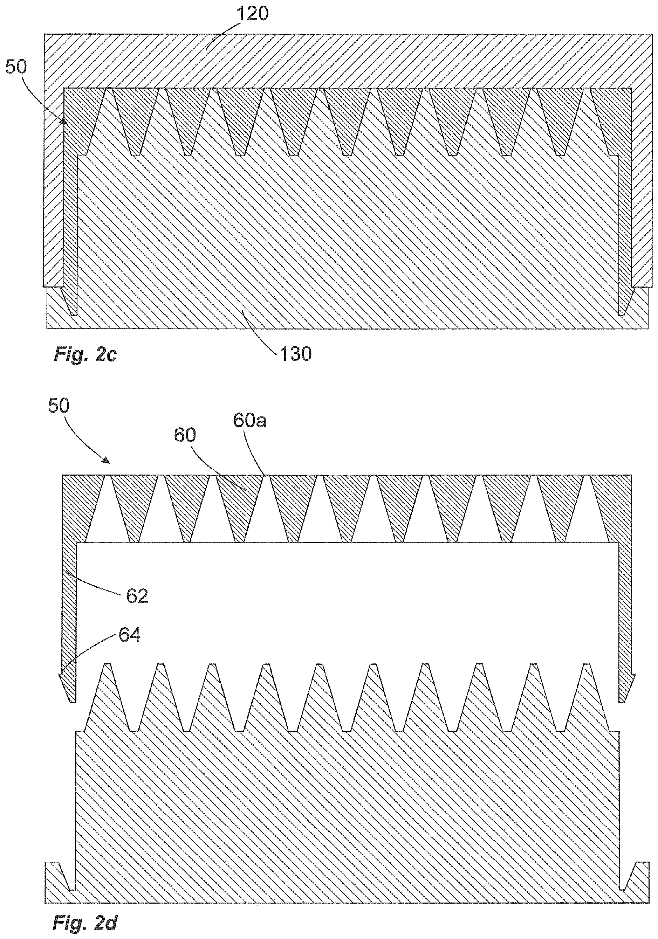

Den Fig. 2a bis 2d ist zu entnehmen, wie die Komponenten 20, 30 als Teil zweier Werkzeughälften 120, 130 zur Herstellung einer erfindungsgemäßen Düseneinheit mit erfindungsgemäßer Lochplatte Verwendung finden. Die Komponenten 20, 30 sind jeweils einer der Werkzeughälften 120, 130 zugeordnet. Die Werkzeughälften 120, 130 weisen darüber hinaus noch weitere Abschnitte auf, die gemeinsam eine in Fig. 2b dargestellte Kavität 140 begrenzen. Wenn diese Kavität 140 nach Schließen des Werkzeugs mit flüssigen Kunststoff, beispielsweise Polypropylen, befüllt wird, ergibt sich nach dem Erstarren eine Düseneinheit 50, dargestellt in Fig. 2d, die neben einer der 60 auch einen diese umgebenden Befestigungsrahmen 62 mit ihren vorgesehenen Rastnasen 64 umfasst.

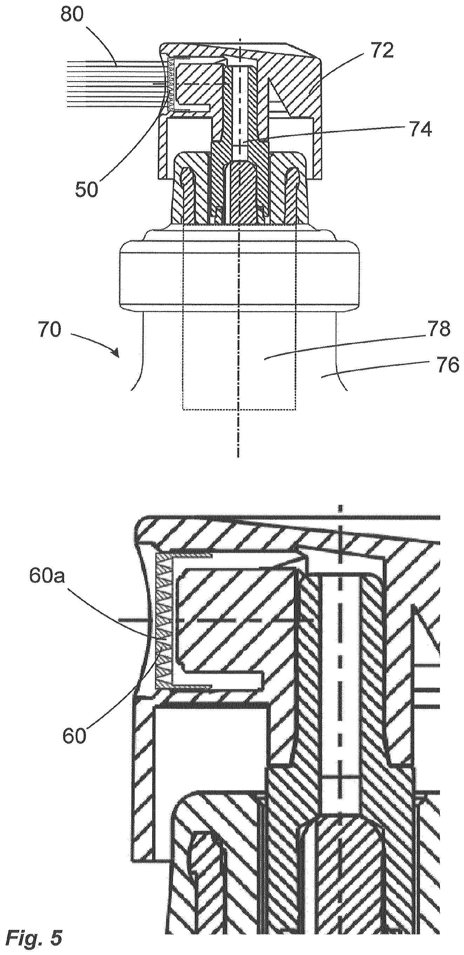

Diese Düseneinheit 50 kann in der in Fig. 5 dargestellten Weise in den Austragkopf 72 eines Spenders 70 eingesetzt werden. Sie ist dort über einen Verbindungskanal 74 mit einem Flüssigkeitsspeicher 76 verbunden, so dass von innen druckbeaufschlagte Flüssigkeit gegen die Lochplatte 60 gedrückt werden kann, welche durch die Lochplatte in Form einer Vielzahl dünner Sprühstrahlen 80 ausgetragen wird. Es findet also eine Umwandlung des vor der Lochplatte 60 anliegenden Drucks in kentische Energie dieser Sprühstrahlen statt. Die Druckbeaufschlagung der Flüssigkeit kann dabei dadurch erzeugt werden, dass der Spender 70 über eine Pumpeinrichtung 78 verfügt, beispielsweise in Art einer Kolbenpumpe. Alternativ hierzu könnte die Baugruppe 78 auch ein einfaches Ventil umfassen, welches den Durchlass druckbeaufschlagter Flüssigkeit regelt. In einem solchem Fall bedarf es einer vorherigen Druckbeaufschlagung. Diese kann dadurch gegeben sein, dass bereits bei der Herstellung des Spenders die Flüssigkeit im Flüssigkeitsspeicher 76 druckbeaufschlagt wird, beispielsweise über ein Treibmittel oder eine vorgespannte Feder.

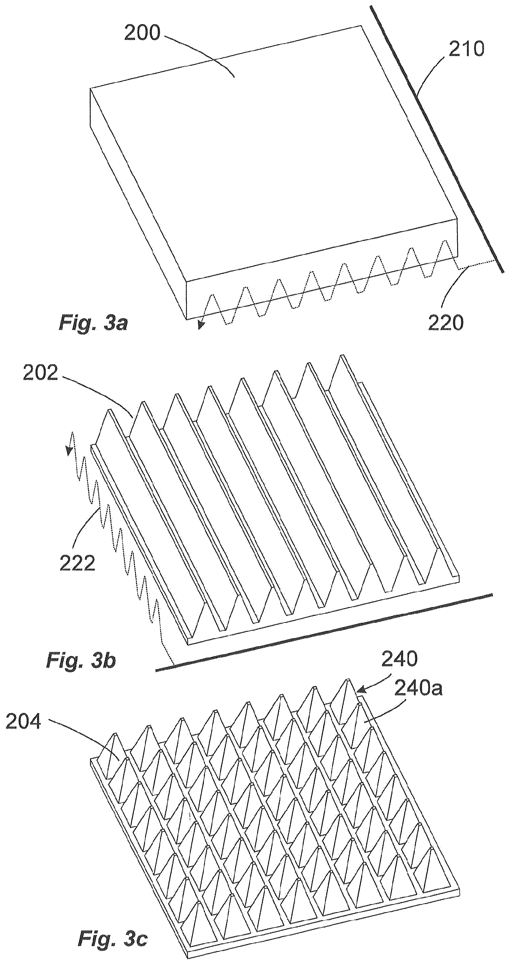

Die Herstellung der werkzeugseitigen Erhebungen, die dem Freihalten der Austragkanäle dienen, erfolgt vorzugsweise in der in den Fig. 3a bis 3c geschilderter Weise. Wie der Fig. 3a zu entnehmen ist, wird hierzu ausgehend von einem insbesondere metallischen Rohling 200 eine Vielzahl von zueinander parallelen Nuten in diesen Rohling 200 eingebracht. Dies erfolgt vorzugsweise mittels eines Erodierdrahtes 210, der entsprechend dem Pfad 220 in einer Zick-Zack-Bewegung durch den Rohling hindurchgeführt wird. Die Ausrichtung des Erodierdrahtes 210 bleibt hierbei unverändert. Nachdem die zueinander parallelen Nuten 202 entsprechend der Fig. 3b hergestellt wurden, wird diese Vorgehensweise mit einem um 90° verlagerten Erodierdraht 210 nochmals wiederholt, wobei dieser wiederum entsprechend dem Pfad 222 entlang einer Zick-Zack-Bewegung durch den Rohling 200 hindurch geführt wird. Es bleiben hierdurch die in Fig. 3c dargestellten Erhebungen 240 stehen. Die Verwendung eines Erodierdrahtes ist hierbei zwar von Vorteil, jedoch nicht alternativlos. Stattdessen könnten die Nuten jeweils auch durch eine spanende Bearbeitung erzeugt werden. Auch ist es möglich, statt Nuten 202, 204 in zwei gegeneinander um 90° versetzten Richtungen einzubringen, die Ausrichtung des Erodierdrahtes 210 dreimal oder noch häufiger zu wechseln. Bei drei um jeweils 60° gegeneinander versetzten Ausrichtungen des Erodierdrahtes während der Herstellung ergibt sich eine Struktur mit Erhebungen, die jeweils drei statt vier Seitenflächen 240a aufweisen.

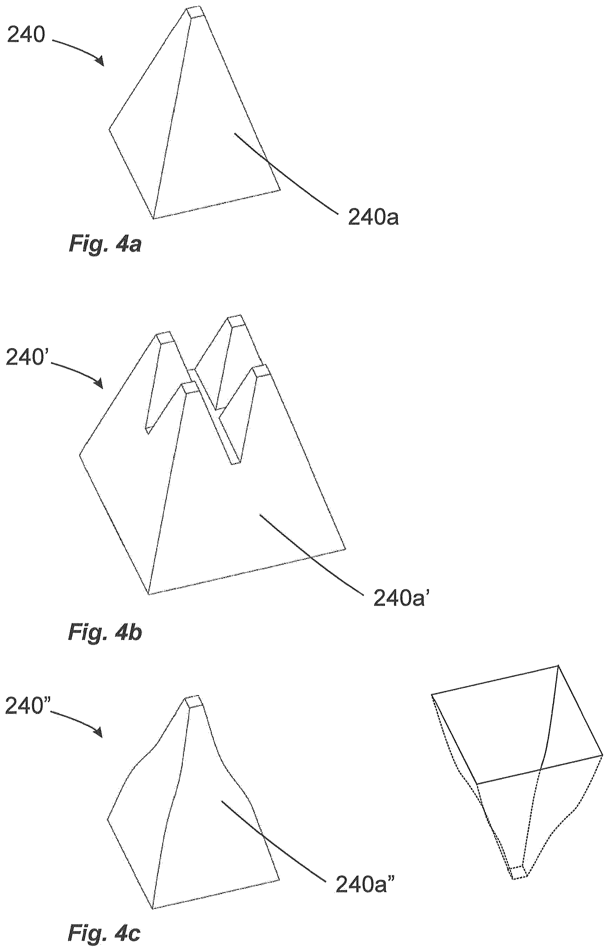

Insbesondere durch die Verwendung des Erodierdrahtes wird es auch möglich, andere Formgebungen als die des einfachen Pyramidenstumpfes der Fig. 4a für die Erhebungen 240 vorzusehen. So zeigt Fig. 4b, dass durch einen angepassten Bewegungspfad des Erodierdrahtes 210 auch eine Gestaltung 240' möglich ist, bei der eine Mehrzahl von Öffnungen an der Außenseite der Lochplatte einer gemeinsamen Öffnung an der Innenseite der Lochplatte zugeordnet sind. Weiterhin zeigt Fig. 4c, dass die Seitenflächen 240a" der Erhebung 240" in sich nicht eben zu sein brauchen. So lassen sich Formgebungen herstellen, die in Abhängigkeit der auszutragenden Flüssigkeit strömungstechnische Vorteile bieten. Durch die Bewegung des Erodierdrahtes 210 quer zu seiner Erstreckungsrichtung ergibt sich jedoch, dass auch bei einer Gestaltung wie der der Fig. 4c die Normalenvektoren jeweils einer Seitenfläche 240a" in einer gemeinsamen Normalenvektorenebene oder parallel hierzu liegen.

Exemplarisch ist in Fig. 4c rechts dargestellt, welche Formgebung der Austragöffnungen 60a sich durch eine korrespondierende Formgebung der Erhebung 240" ergibt.

In dieser Beschreibung der verschiedenen Aspekte der Erfindung sind einzelne Merkmale nur im Kontext des Werkzeugs beschrieben worden. Da die Art der Herstellung des Formwerkzeugs Auswirkungen auf jenes Formwerkzeug hat und da dieses Formwerkzeug wiederrum die Form der erfindungsgemäßen Lochplatte beeinflusst, sind die entsprechenden Merkmale jeweils als auch in Hinblick auf die Lochplatte selbst offenbart anzusehen.

## Patentansprüche

1. Lochplatte (60) für einen Spender (70) zum Austrag von Flüssigkeit,
wobei
- die Lochplatte (60) als im Spritzgussverfahren hergestelltes Kunststoffteil hergestellt ist,
- die Lochplatte (60) von einer Vielzahl von Austragöffnungen (60a) durchdrungen wird, wobei jede Austragöffnung (60a) sich von einer ersten Seite der Lochplatte (60) zu einer zweiten Seite der Lochplatte verjüngt und
- die Lochplatte mindestens 25 Austragöffnungen (60a) aufweist, wobei diese Austragöffnungen (60a) derart angeordnet sind, dass mindestens 5 Austragöffnungen je mm² vorgesehen sind,
**dadurch gekennzeichnet, dass**
mindestens eine der Austragöffnungen (60a) und vorzugsweise alle Austragöffnungen (60a) jeweils zwischen 3 und 6 Seitenflächen aufweist.

2. Lochplatte nach Anspruch 1,
**dadurch gekennzeichnet, dass**
die Lochplatte (60) als Kunststoffbauteil mittels Spritzguss hergestellt wird, wobei hierfür ein Formwerkzeug (10) mit zwei Werkzeughälften (120, 130) vorgesehen ist, die gemeinsam eine Kavität (140) definieren, die beim Spritzgießen mit Kunststoff gefüllt wird, wobei
- die erste Werkzeughälften (120) eine der Kavität zugewandte ebene Anlagefläche (20) aufweist und
- die zweite Werkzeughälfte (130) eine Vielzahl von sich über eine Grundfläche (32) erhebende Erhebungen (40; 240a; 240a'; 240a") aufweist,
wobei im geschlossenen Zustand des Formwerkzeugs (10) distale Kontaktbereiche (42) an den distalen Enden der Erhebungen (40; 240a; 240a'; 240a") an der Anlagefläche (20) anliegen, so dass sie beim Einspritzen des Kunststoffs die Austragöffnungen (60a) von Kunststoff freihalten.

3. Lochplatte (60) nach Anspruch 1 oder 2,
**dadurch gekennzeichnet, dass**
die Austragöffnungen (60a) jeweils an einer Außenseite der Lochplatte (60) ihren minimalen Querschnitt aufweisen, wobei die freie Querschnittsfläche der Austragöffnung (60a) an der Außenseite zwischen 25 µm² und 10.000 µm² beträgt.

4. Lochplatte (60) nach einem der vorstehenden Ansprüche,
**dadurch gekennzeichnet, dass**
die Austragöffnungen (60a) durch eine Mehrzahl von Seitenflächen begrenzt werden, wobei diese Seitenflächen jeweils derart geformt sind, dass die Gesamtheit aller Normalenvektoren auf einem beliebigen Teil einer Seitenfläche in einer gemeinsamen Normalenvektorenebene oder parallel zu dieser Ebene angeordnet sind.

5. Lochplatte nach nach Anspruch 4,
**dadurch gekennzeichnet, dass**
die Seitenflächen von einer Mehrzahl von Austragöffnungen (60a) zueinander fluchten, so dass die Normalenvektorenebene einer Seitenfläche einer Austragöffnung (60a) parallel zu der Normalenvektorenebene einer Seitenfläche einer anderen Austragöffnung (60a) angeordnet ist.

6. Lochplatte nach einem der vorstehenden Ansprüche,
**dadurch gekennzeichnet, dass**
die Zahl der Seitenflächen 4 beträgt.

7. Lochplatte nach einem der vorstehenden Ansprüche,
**dadurch gekennzeichnet, dass**
die Seitenflächen der Austragöffnungen (60a) mit einer Flächennormale auf einer Grundfläche der Lochplatte einen Winkel zwischen 7,5° - 45° einschließen, vorzugsweise zwischen 15° und 22,5°.

8. Lochplatte nach einem der vorstehenden Ansprüche,
**dadurch gekennzeichnet, dass**
die eine Dicke zwischen 0,1 und 1,5 mm aufweist, vorzugsweise zwischen 0,2 und 0,8 mm.

9. Düseneinheit (50) für einen Spender zum Austrag von Flüssigkeiten,
**dadurch gekennzeichnet, dass**
die Düseneinheit (50) eine nach einem der vorstehenden Ansprüche ausgebildete Lochplatte (60) und einen damit einstückig verbundenen Befestigungsrahmen (62) aufweist, der die Lochplatte umgibt und zur Festlegung an einem Austragkopf (72) des Spenders (70) vorgesehen ist.

10. Spender (70) zum Austrag von Flüssigkeiten mit einem Flüssigkeitsspeicher (76), einer Düseneinheit (50) sowie einem den Flüssigkeitsspeicher mit der Düseneinheit verbindenden Verbindungskanal (74),
**dadurch gekennzeichnet, dass**
die Düseneinheit (50) nach Anspruch 9 ausgebildet ist oder eine Lochplatte (60) nach einem der Ansprüche 1 oder 8 aufweist.

11. Spender (70) nach Anspruch 10,
**dadurch gekennzeichnet, dass**
der Spender (70)
- eine manuelle Pumpvorrichtung (78) aufweist, mittels derer Flüssigkeit aus einem Flüssigkeitsspeicher (76) druckbeaufschlagt wird, wobei durch diese Druckbeaufschlagung die Flüssigkeit durch die Austragöffnungen (60a) der Lochplatte (60) hindurch gedrückt wird oder
- ein der Lochplatte vorgeschaltetes Auslassventil (78) und einen Druckspeicher (76) aufweist, mittels dessen Flüssigkeit in einem Flüssigkeitsspeicher des Spenders (70) permanent druckbeaufschlagt ist, wobei durch Öffnen des Auslassventils (78) der Zustrom der Flüssigkeit zu Lochplatte (60) und der Austrag der Flüssigkeit durch die Lochplatte (60) hindurch möglich ist.

## Claims

1. Perforated plate (60) for a dispenser (70) for dispensing liquid,
wherein
- the perforated plate (60) is produced as a plastics part by injection moulding,
- the perforated plate (60) has a multiplicity of dispensing openings (60a) passing through it, wherein each dispensing opening (60a) tapers from a first side of the perforated plate (60) to a second side of the perforated plate, and
- the perforated plate has at least 25 dispensing openings (60a), wherein said dispensing openings (60a) are arranged such that at least five dispensing openings are provided per mm²,
**characterized in that**
at least one of the dispensing openings (60a) and preferably all the dispensing openings (60a) each have between 3 and 6 side surfaces.

2. Perforated plate according to Claim 1,
**characterized in that**
the perforated plate (60) is produced as a plastics component by means of injection moulding, there being provided, for this purpose, a mould (10) with two mould halves (120, 130) which, together, define a cavity (140) which is filled with plastics material during injection moulding, wherein
- the first mould half (120) has a planar abutment surface (20) directed towards the cavity, and
- the second mould half (130) has a multiplicity of elevations (40; 240a; 240a'; 240a") rising up over a base surface (32),
wherein, in the closed state of the mould (10), distal contact regions (42) at the distal ends of the elevations (40; 240a; 240a'; 240a") butt against the abutment surface (20), and they therefore keep the dispensing openings (60a) free of plastics material when the plastics material is being injected.

3. Perforated plate (60) according to Claim 1 or 2,
**characterized in that**
the dispensing openings (60a) have their minimal cross section in each case on an outside of the perforated plate (60), wherein the free cross-sectional surface area of the dispensing opening (60a) on the outside is between 25 µm² and 10 000 µm².

4. Perforated plate (60) according to one of the preceding claims,
**characterized in that**
the dispensing openings (60a) are bounded by a plurality of side surfaces, wherein said side surfaces are each formed such that all the normal vectors to any desired part of a side surface are arranged in a common normal-vector plane or parallel to said plane.

5. Perforated plate according to Claim 4,
**characterized in that**
the side surfaces of a plurality of dispensing openings (60a) are aligned with one another, and therefore the normal-vector plane of a side surface of one dispensing opening (60a) is arranged parallel to the normal-vector plane of a side surface of another dispensing opening (60a).

6. Perforated plate according to one of the preceding claims,
**characterized in that**
the number of side surfaces is 4.

7. Perforated plate according to one of the preceding claims,
**characterized in that**
the side surfaces of the dispensing openings (60a) enclose an angle between 7.5° and 45°, preferably between 15° and 22.5°, with a surface normal to a base surface of the perforated plate.

8. Perforated plate according to one of the preceding claims,
**characterized in that**
it has a thickness between 0.1 and 1.5 mm, preferably between 0.2 and 0.8 mm.

9. Nozzle unit (50) for a dispenser for dispensing liquids,
**characterized in that**
the nozzle unit (50) has a perforated plate (60), which is designed according to one of the preceding claims, and a fastening frame (62), which is connected in one piece thereto, encloses the perforated plate and is provided for securing on a dispensing head (72) of the dispenser (70).

10. Dispenser (70) for dispensing liquids, having a liquid store (76), a nozzle unit (50) and a connecting channel (74), which connects the liquid store to the nozzle unit,
**characterized in that**
the nozzle unit (50) is designed according to Claim 9 or has a perforated plate (60) according to either of Claims 1 and 8.

11. Dispenser (70) according to Claim 10,
**characterized in that**
the dispenser (70)
- has a manual pumping mechanism (78), by means of which liquid is pressure-activated out of a liquid store (76), wherein this pressure activation pushes the liquid through the dispensing openings (60a) of the perforated plate (60), or
- has an outlet valve (78), which is arranged upstream of the perforated plate, and a pressure store (76), by means of which liquid in a liquid store of the dispenser (70) is subjected to pressure on a permanent basis, wherein opening of the outlet valve (78) allows the liquid to flow to the perforated plate (60) and the liquid to be dispensed through the perforated plate (60).

## Revendications

1. Plaque perforée (60) pour un distributeur (70) d'extraction de liquide,
la plaque perforée (60) étant configurée sous la forme d'une pièce en matière synthétique formée par un procédé de moulage par injection,
la plaque perforée (60) étant traversée par plusieurs ouvertures d'extraction (60a), chaque ouverture d'extraction (60a) se rétrécissant entre un premier côté de la plaque perforée (60) et un deuxième côté de la plaque perforée et
la plaque perforée présentant au moins 25 ouvertures d'extraction (60a), ces ouvertures d'extraction (60a) étant disposées de telle sorte qu'au moins 5 ouvertures d'extraction soient prévues par mm², **caractérisée en ce que**
au moins l'une des ouvertures d'extraction (60a) et de préférence toutes les ouvertures d'extraction (60a) présentent entre 3 et 6 faces latérales.

2. Plaque perforée selon la revendication 1, **caractérisée en ce que** la plaque perforée (60) est réalisée par injection sous la forme d'un composant en matière synthétique, un outil de moulage (10) présentant deux moitiés d'outil (120, 130) qui définissent ensemble une cavité (140) remplie de matière synthétique lors du moulage par injection étant prévu dans ce but, la première moitié d'outil (120) présentant une surface de pose plane (20) tournée vers la cavité et la deuxième moitié d'outil (130) présentant plusieurs reliefs (40; 240a; 240a'; 240a") qui débordent d'une surface de base (32), des parties distales de contact (42) prévues sur les extrémités distales des reliefs (40; 240a; 240a'; 240a") reposant contre la surface de pose (20) lorsque l'outil de moulage (10) est en position fermée, de telle sorte qu'elles libèrent les ouvertures d'extraction (60a) de matière synthétique lors de l'injection de la matière synthétique.

3. Plaque perforée (60) selon les revendications 1 ou 2, **caractérisée en ce que** chacune des ouvertures d'extraction (60a) présente sa section transversale minimale sur un côté extérieur de la plaque perforée (60), la superficie libre de la section transversale de l'ouverture d'extraction (60a) valant sur le côté extérieur entre 25 µm² et 10 000 µm².

4. Plaque perforée (60) selon l'une des revendications précédentes, **caractérisée en ce que** les ouvertures d'extraction (60a) sont délimitées par plusieurs faces latérales, chacune de ces faces latérales étant formée de telle sorte que la totalité des vecteurs normaux à une partie quelconque d'une face latérale soient disposés dans un plan commun de vecteurs normaux ou parallèlement à ce plan.

5. Plaque perforée selon la revendication 4, **caractérisée en ce que** les faces latérales de plusieurs ouvertures d'extraction (60a) sont alignées les unes par rapport aux autres de telle sorte que le plan des vecteurs normaux à une face latérale d'une ouverture d'extraction (60a) soit disposé parallèlement au plan des vecteurs normaux à une face latérale d'une autre ouverture d'extraction (60a).

6. Plaque perforée selon l'une des revendications précédentes, **caractérisée en ce que** le nombre des faces latérales est de 4.

7. Plaque perforée selon l'une des revendications précédentes, **caractérisée en ce que** les faces latérales des ouvertures d'extractions (60a) forment avec une normale à une surface de base de la plaque perforée un angle compris entre 7,5° et 45° et de préférence entre 15° et 22,5°.

8. Plaque perforée selon l'une des revendications précédentes, **caractérisée en ce qu'**elle présente une épaisseur comprise entre 0,1 et 1,5 mm et de préférence entre 0,2 et 0,8 mm.

9. Unité de tuyère (50) pour un distributeur d'extraction de liquides,
**caractérisée en ce que**
l'unité de tuyère (50) présente une plaque perforée (60) configurée selon l'une des revendications précédentes et un bâti de fixation (62) qui lui est relié d'un seul tenant, qui entoure la plaque perforée et qui est prévu pour la fixer sur une tête d'extraction (72) du distributeur (70).

10. Distributeur (70) d'extraction de liquides, qui présente une réserve (76) à liquide, une unité de tuyère (50) ainsi qu'un canal (74) qui relie la réserve à liquide à l'unité de tuyère,
**caractérisé en ce que**
l'unité de tuyère (50) est configurée selon la revendication 9 ou présente une plaque perforée (60) selon l'une des revendications 1 ou 8.

11. Distributeur (70) selon la revendication 10, **caractérisé en ce que** le distributeur (70) présente un ensemble manuel de pompe (78) au moyen duquel une pression peut être appliquée sur un liquide provenant d'une réserve (76) à liquide, l'application de cette pression refoulant le liquide à travers les ouvertures de sortie (60a) de la plaque perforée (60), ou une soupape de sortie (78) raccordée en amont de la plaque perforée et une réserve (76) sous pression au moyen de laquelle une pression est appliquée en permanence sur le liquide présent dans une réserve à liquide du distributeur (70), l'ouverture de la soupape de sortie (78) permettant au liquide de s'écouler vers la plaque perforée (60) et permettant l'extraction du liquide à travers la plaque perforée (60).
